# EUROPEAN PATENT SPECIFICATION

(11) **EP 2 902 242 B1**
(45) Date of publication and mention of the grant of the patent: **23.08.2017**
(21) Application number: 15151906.3
(22) Date of filing: 21.01.2015
(51) Int. Cl.: B60K 37/06, B60R 21/09, H01H 3/08, B60R 21/055, H01H 3/02

(54) **FALL-OFF STRUCTURE FOR SWITCH**
ABFALLVORRICHTUNG FÜR EINEN SCHALTER
STRUCTURE DE DÉCROISSANCE DE COMMUTATION

(30) Priority: 30.01.2014 JP 2014016029
(43) Date of publication of application: 05.08.2015
(73) Proprietor: KABUSHIKI KAISHA TOKAI RIKA DENKI SEISAKUSHO, Niwa-gun, Aichi 480-0195 (JP); Toyota Jidosha Kabushiki Kaisha, Toyota-shi, Aichi-ken 471-8571 (JP)
(72) Inventor: Oriyama, Enju, Ohguchi-cho, Niwa-gun, Aichi 480-0195 (JP); Iwata, Fumiaki, Ohguchi-cho, Niwa-gun, Aichi 480-0195 (JP); Yamamoto, Yosuke, Toyota-shi, Aichi-ken, 471-8571 (JP); Goto, Yoshihiko, Toyota-shi, Aichi-ken, 471-8571 (JP)
(74) Representative: Viering, Jentschura & Partner mbB Patent- und Rechtsanwälte

(56) References cited:
- EP-A1- 1 661 771
- CN-U- 201 951 261
- DE-U- 6 933 661
- US-A- 4 051 916

## Description

The present invention relates to a fall-off structure for a switch in which a switch assembly falls off from a switch mount when receiving an impact.

Vehicle safety regulations determine the maximum projection length of an interior component from an interior panel in a passenger compartment to protect passengers when an impact of a predetermined amount or greater is applied to the interior component. Japanese Laid-Open Patent Publication No. 2003-11744 describes a mode switch assembly including an impact absorber. The mode switch assembly includes a circuit board located at the inner side of a passenger compartment center console, a switch including a shaft located on the circuit board, and a knob arranged on the shaft and projecting from the passenger compartment center console. When an impact is applied to the shaft from the knob, the impact absorber breaks a brittle breakable portion, which is a portion of the circuit board, and moves the knob rearward relative to the passenger compartment center console.

The above impact absorber is configured to absorb an impact by breaking the breakable portion of the circuit board. Once the impact absorber is used, the broken circuit board is replaced with a new circuit board when repairing the switch assembly. Even when most of the circuit board remains unbroken except for the breakable portion, the whole circuit board is replaced. Replacement of a large component, such as the circuit board, increases repair costs including the unit price and transportation cost of the replacement component.

EP 1661771 A1 discloses an operation panel unit which includes a unit main body, and a mounting piece which is disposed to protrude from a side of a housing of the unit main body and has a V-shaped groove which is ruptured when a pressure over a predetermined value is applied on the unit main body, and thus the unit main body can be buried in a direction in which the pressure is applied. US 4051916 discloses an apparatus for mounting an instrument to an instrument panel in a motor vehicle, and DE 6933661 U discloses a device for mounting a device, in particular a switch or the like, in a dashboard of a vehicle.

It is an object of the present invention to reduce the size of a component (also referred to as a repair unit) replaced after a fall-off structure for a switch is used.

The present invention provides a fall-off structure for a switch according to claim 1 and a switch device according to claim 4. Further advantageous embodiments of the present invention are disclosed in the dependent claims.

A fall-off structure for a switch is configured so that a switch assembly including a plurality of switch components falls off from a switch mount when an impact is received. The fall-off structure for a switch includes a breakable component that has brittleness and is configured to break when an impact is applied to the switch assembly. The breakable component is a dedicated component independent from another component of the switch assembly.

In this structure, when an impact is applied to a switch assembly, the brittle breakable component breaks and the switch assembly falls off. After falling off, the breakable component, which has been broken by the impact, is replaced with a new one. That is, the repair unit is the breakable component, which is small compared to a panel, a board, a body, a housing shell, or the like. This reduces the size of the repair unit used after the switch assembly falls off.

The switch assembly includes an accommodation portion including an entrance opening and a stopper surface and configured to allow the breakable component to enter the entrance opening and slidably move to the stopper surface.

In this structure, the breakable component slides into the accommodation portion. This simplifies the task for coupling the breakable component and the task for removing broken pieces of the breakable component.

According to one or more aspects of the present invention, the breakable component includes a guide surface configured to set a coupling direction of the breakable component relative to the switch assembly.

The guide surface sets the coupling direction of the breakable component. This allows the breakable component to be coupled to the switch assembly at the desired position in the desired orientation without mistakes in the orientation of the breakable component. Thus, the breakable component breaks as expected when receiving an impact. This obtains the desired fall-off property.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a perspective view of a switch device;
Fig. 2 is an exploded perspective view of the switch device;
Fig. 3 is a partial perspective view of a switch assembly;
Fig. 4 is a perspective view showing the surrounding of a breakable component;
Figs. 5A and 5B are perspective views of an accommodation portion;
Fig. 6A is a perspective view of a breakable component;
Fig. 6B is a front view of the breakable component; and
Fig. 7 is a partial cross-sectional view showing when the switch assembly falls off when an impact is received.

One embodiment of a switch device will now be described.

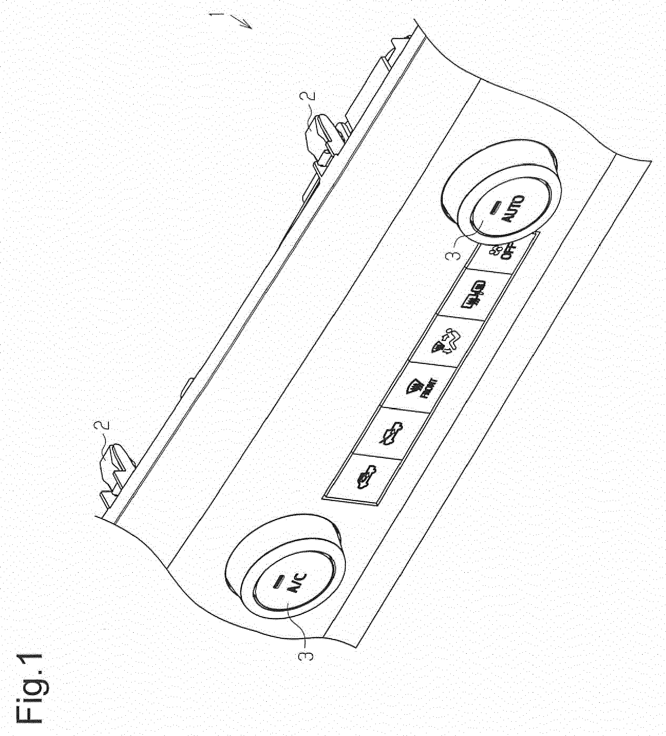

As shown in Fig. 1, a switch device 1 according to one embodiment may be a heater controller switch device or an air conditioner controller switch device. The switch device 1 is directly or indirectly attached to a center console (not shown) of a vehicle by a plurality of fasteners 2. The switch device 1 is an interior component of the vehicle. The switch device 1 includes at least one knob 3. The knob 3 is an example of a switch component projecting into the passenger compartment.

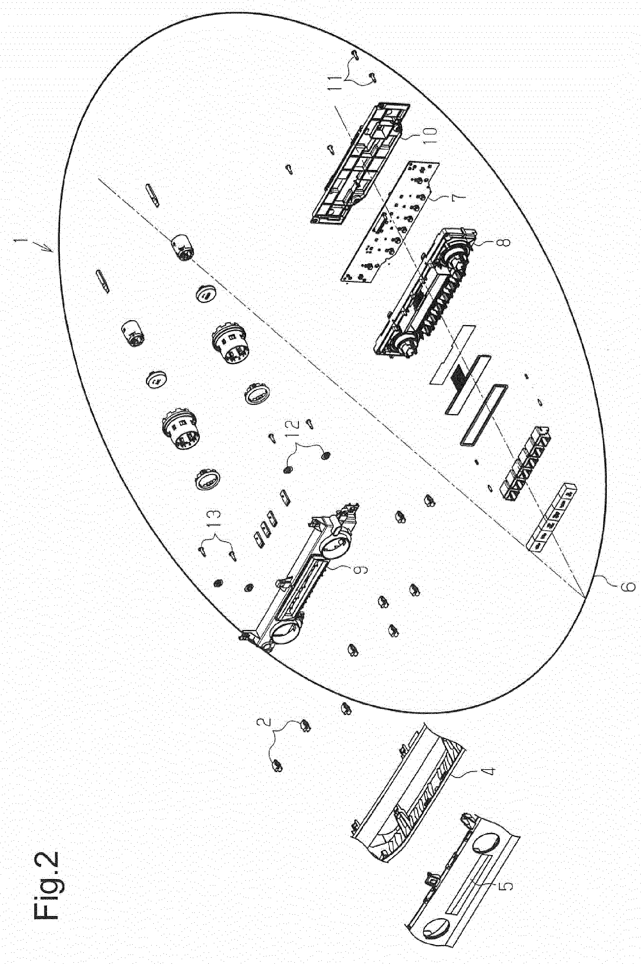

As shown in Fig. 2, the switch device 1 may be divided into an outer panel 4 supporting the fasteners 2, a switch cover pane! 5 including an ornamental surface, and a switch assembly 6. The outer panel 4 and the cover panel 5 of the embodiment may form at least a portion of the center console in the passenger compartment. The switch assembly 6 may be referred to as a switch main body. The switch cover panel 5 may include a liquid crystal display (LCD) window or an LCD panel.

The switch assembly 6 includes a circuit board 7, a body 8, a first housing shell 9, and a second housing shell 10. A plurality of switch components including the circuit board 7 are arranged at or supported by predetermined locations of the body 8. This assembles the switch components in the body 8. The body 8 is located in an accommodation space formed by the first housing shell 9 and the second housing shell 10. The first housing shell 9, the body 8, and the second housing shell 10 are fastened by screws 11 and integrated into a unit.

The screws 11 inserted from screw insertion holes (not shown) of the second housing shell 10 extend through screw insertion holes of the circuit board 7 and the body 8 and are fastened to threaded holes of the first housing shell 9. The screws 11 hold the body 8, the first housing shell 9, and the second housing shell 10 as an integrated unit.

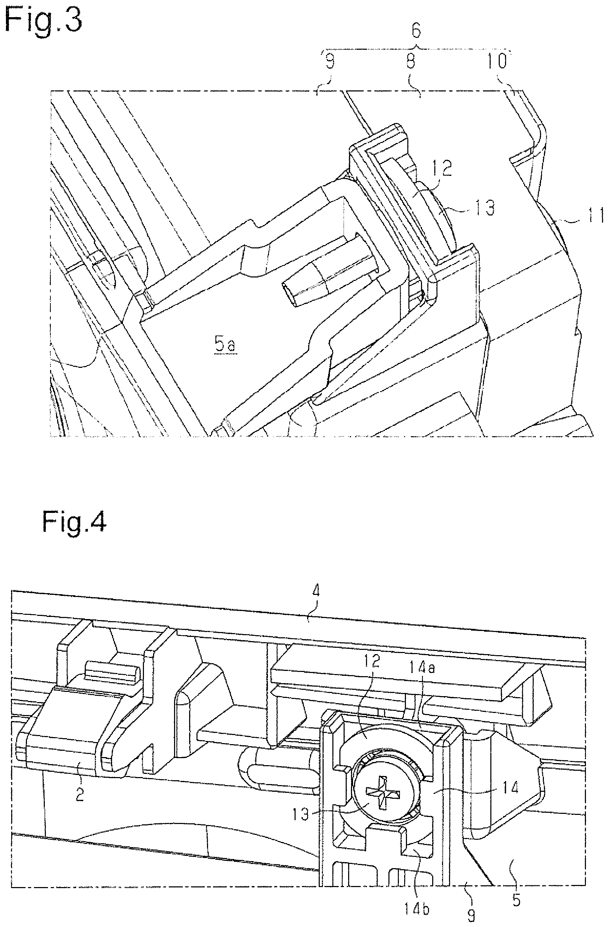

As shown in Figs. 3 and 4, when the switch cover panel 5 is coupled to the outer panel 4, screw engagement portions 5a, which are parts of the switch cover panel 5, are located between the switch assembly 6 and the outer panel 4. Together with the switch cover panel 5, the switch assembly 6 is coupled to the outer panel 4 (switch mount) by screws 13 and brittle plate-like breakable components 12. Thus, the switch assembly 6 falls off from the outer panel 4 when the screws 13 are removed or when the brittle breakable components 12 break.

As shown in Fig. 4, accommodation portions 14 project from the outer edge of the first housing shell 9. Each accommodation portion 14 holds one of the plate-like breakable components 12. One of the screws 13 fastens a central portion of the breakable component 12 to the accommodation portion 14. The screw 13 engages the corresponding screw engagement portion 5a of the switch cover panel 5 through the breakable component 12 and the accommodation portion 14.

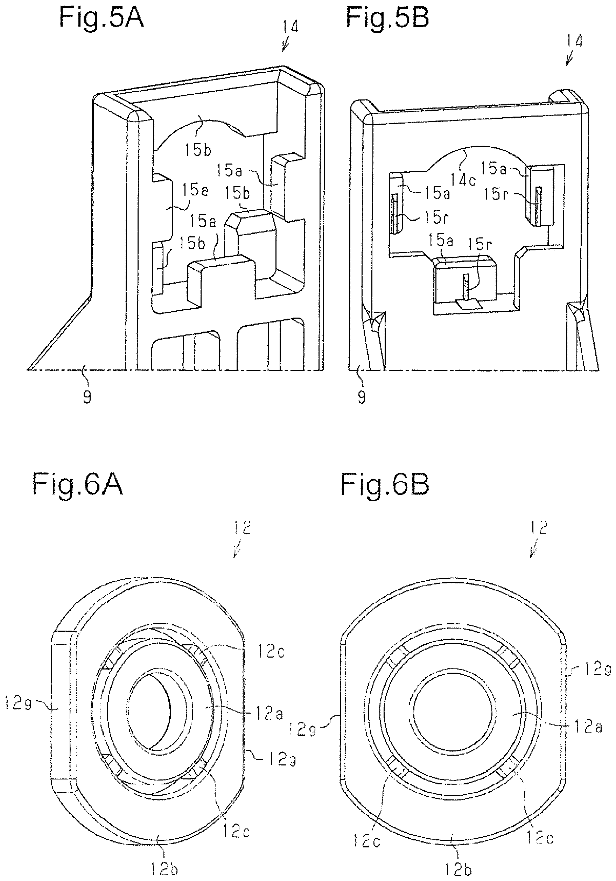

As shown in Figs. 5A and 5B, each accommodation portion 14 includes a binder, which is formed by a plurality of first holding pieces 15a and a plurality of second holding pieces 15b, to hold the corresponding breakable component 12 in the thicknesswise direction of the breakable component 12. The first holding pieces 15a contact or engage a first surface of the breakable component 12. The second holding pieces 15b contact or engage a second surface of the breakable component 12. The accommodation portion 14 includes an entrance opening 14a at the upper edge. The breakable component 12 is press-fitted from the entrance opening 14a into between the first holding pieces 15a and the second holding pieces 15b and held on a stopper surface 14b. Each holding piece 15a may include a rib 15r that locally presses the first surface of the breakable component 12.

As shown in Figs. 6A and 6B, each breakable component 12 includes an annular fastening portion 12a, an annular fall-off portion 12b, and one or more (e.g., four) brittle portions 12c. The fastening portion 12a includes a central through hole that receives a screw 13. The fall-off portion 12b is slightly larger than the fastening portion 12a and extends around the fastening portion 12a. The brittle portions 12c connect the fastening portion 12a and the fall-off portion 12b. The fall-off portion 12b forms the outline of the breakable component 12. The fastening portion 12a may be coaxial to or concentric to the fall-off portion 12b. The brittle portions 12c radially extend from the outer circumference of the fastening portion 12a to the inner circumference of the fall-off portion 12b at intervals of approximately 90° in the circumferential direction. Each brittle portion 12c may be referred to as a bridge. The outer circumference of the fall-off portion 12b includes two parallel guide surfaces 12g, which are separated by the same distance from the center of the central through hole. The guide surfaces 12g set a coupling direction of the breakable component 12 relative to the accommodation portion 14 of the first housing shell 9. When the breakable component 12 is held by the accommodation portion 14, the four brittle portions 12c are generally located in the one thirty, four thirty, seven thirty, and ten thirty hour-hand positions of a clock face. The orientation of the brittle portions 12c may be set so that the breakable component breaks as expected when receiving an impact to obtain the desired fall-off property.

As shown in Fig. 5B, it is preferred that the second holding pieces 15b of the accommodation portion 14 be formed around a through hole 14c that is separated from the entrance opening 14a. The through hole 14c is formed so that the second holding pieces 15b of the accommodation portion 14 engage the fall-off portion 12b of the breakable component 12 but not the fastening portion 12a of the breakable component 12.

When the brittle portions 12c of the breakable component 12 break, the fall-off portion 12b of the breakable component 12 remains in the accommodation portion 14, and the fastening portion 12a is moved through the through hole 14c and released from the accommodation portion 14.

The breakable components 12 are discrete from the switch assembly 6 and may be referred to as a breakable washer component or a breakable spacer component. The fall-off structure includes the breakable component 12 and the accommodation portion 14.

The operation of the fall-off structure for a switch will now be described.

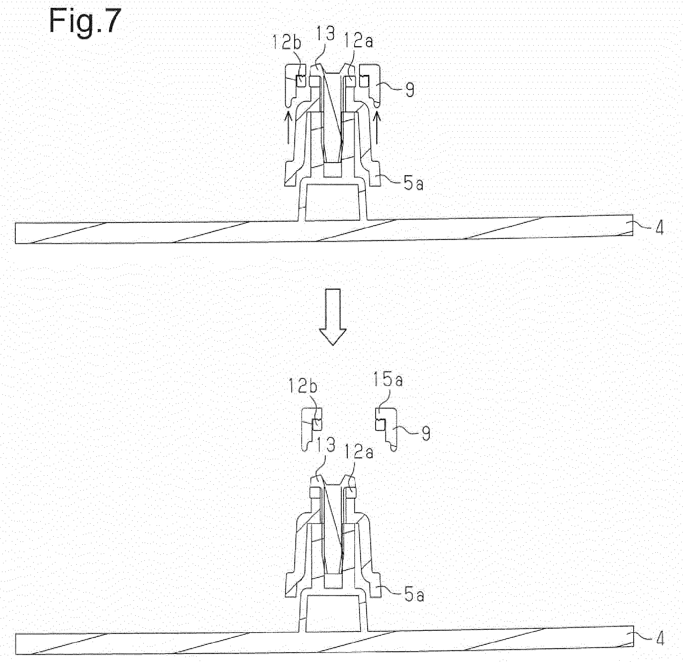

As shown in the upper section of Fig. 7, the screws 13, which are inserted through the breakable components 12, couple the first housing shell 9, which is a part of the switch assembly 6, together with the switch cover panel 5 to the outer panel 4.

When an impact indicated by upward arrows in Fig. 7 is applied to the switch assembly 6, the brittle portions 12c of each breakable component 12 break. This separates the fastening portion 12a from the fall-off portion 12b in the breakable component 12. The fastening portion 12a of the breakable component 12 remains fastened to the outer panel 4. The fall-off portion 12b of the breakable component 12 falls off from the outer panel 4 together with the switch assembly 6. The breakable component 12 is press-fitted to the accommodation portion 14. Thus, the fall-off portion 12b is held by the first and second holding pieces 15a and 15b when falling off together with the switch assembly 6 including the first housing shell 9. As a result, the fall-off portions 12b of the breakable components 12 are not scattered when the breakable components 12 break. The switch assembly 6 falls off so that, for example, the knob 3 having the largest projection amount in the switch assembly 6 satisfies the safety regulations that determine the maximum projection length.

After the switch assembly 6 falls off, a replacement task is performed to replace the breakable components 12 that have been broken by an impact with new ones. The serviceman performing the replacement removes fragments (fall-off portion 12b) from between the first and second holding pieces 15a and 15b of each broken breakable component 12. The serviceman also removes the screws 13 to remove fragments (fastening portions 12a) from the outer panel 4.

Then, the serviceman puts a new breakable component 12 from the entrance opening 14a into each accommodation portion 14 and slides the breakable component 12 to the stopper surface 14b. This couples the new breakable component 12 to the accommodation portion 14. After replacing the breakable components 12, the serviceman couples the switch assembly 6 together with the switch cover panel 5 to the outer panel 4 with the screws 13 inserted through the replaced breakable components 12. This may reduce costs for repairing the switch device 1 after the switch assembly 6 falls off.

The present embodiment has the advantages described below.
(1) The brittle breakable component 12, which is configured to break when an impact is applied to the switch assembly 6, is a dedicate component independent from other components of the switch assembly 6. In this configuration, when an impact is applied to the switch assembly 6, the breakable component 12 breaks and the switch assembly 6 falls off from the outer panel 4. Each broken breakable component 12 is replaced with a new one after the switch assembly 6 falls off. The repair unit is the breakable components 12, which is small compared to the panels 4 and 5, the circuit board 7, the body 8, the housing shells 9 and 10, or the like. Accordingly, the repair unit used after a fall-off occurs is reduced in size.
(2) The switch assembly 6 includes the accommodation portion 14, which includes the entrance opening 14a and stopper surface 14b for each breakable component 12. The accommodation portion 14 is configured to allow the breakable component 12 to slidably move from the entrance opening 14a to the stopper surface 14b. In this configuration, the breakable component 12 is moved in and coupled to the accommodation portion 14. This simplifies the task for coupling the breakable component 12 and the task for removing fragments of the broken breakable component 12.
(3) Each breakable component 12 includes the guide surfaces 12g that set the coupling direction of the breakable component 12 relative to the switch assembly 6 (accommodation portion 14 of the first housing shell 9). In this configuration, the guide surfaces 12g determine the coupling direction of the breakable component 12. This couples the breakable component 12 to the switch assembly 6 (accommodation portion 14 of the first housing shell 9) at the desired position in the desired orientation without mistakes in the orientation of the breakable component 12. Thus, the breakable component 12 breaks as expected when receiving an impact. This obtains the desired fall-off property.
(4) The switch assembly 6 (first holding pieces 15a in the accommodation portion 14 of the first housing shell 9) includes the ribs 15r that hold the breakable components 12 under pressure. This configuration limits scattering of fragments of the breakable components 12 when broken by an impact applied to the switch assembly 6. Thus, the breakable components 12 can be smoothly replaced.
(5) Each breakable component 12 is press-fitted to and held by the switch assembly 6. Thus, when the switch assembly 6 is coupled to the switch cover panel 5 by the breakable component 12, the switch assembly 6 can be separated from the outer panel 4. Also, as long as an impact is not applied to the breakable component 12, stress produced when tightening the screw 13 acts on only the fastening portion 12a, and no stress acts on the fall-off portion 12b. Thus, two different stresses do not act on the breakable component 12. This limits breakage of the brittle portion 12c that would be caused by a difference between stresses.

It should be apparent to those skilled in the art that the present invention may be embodied in many other specific forms without departing from the scope of the invention. Particularly, it should be understood that the present invention may be embodied in the following forms.

All of the first holding pieces 15a do not have to include the rib 15r. For example, the rib 15r may be omitted from at least one of the first holding pieces 15a. Further, one holding piece 15a may include a plurality of the ribs 15r. The ribs 15r may be omitted from all of the first holding pieces 15a. Instead of or in addition to the first holding pieces 15a, the second holding pieces 15b may include the ribs 15r. Instead of or in addition to the switch assembly 6 (first holding pieces 15a), each breakable component 12 may include the rib 15r.

Each breakable component 12 may include only one guide surface 12g instead of the two guide surfaces 12g. The breakable component 12 may be a thin square plate. In this case, each straight side of the square breakable component 12 may function as the guide surface 12g.

Each breakable component 12 may be a thin polygonal plate or a thin circular plate.

The fastening portion 12a and the fall-off portion 12b of the breakable component 12 may form a step in the thicknesswise direction. For example, when the brittle portion 12c breaks, the switch assembly 6 falls off so that the separation of the fastening portion 12a and the fall-off portion 12b eliminates the step. The projection amount of the knob 3 may be adjusted by setting a step in the breakable component 12.

Each breakable component 12 does not have to be press-fitted to and held by the switch assembly 6 as long as the difference in the stresses generated in the fastening portion 12a and the fall-off portion 12b of the breakable component 12 does not cause breakage of the brittle portion 12c when the breakable component 12 is free from an impact. For example, the screws 13 may fasten the fastening portions 12a to the outer panel 4 and the switch assembly 6 may be held between the fall-off portions 12b and the outer panel 4 to couple the switch assembly 6 to the outer panel 4. In this case, it is desirable that the stress generated in the fall-off portion 12b be reduced when receiving an external force from the switch assembly 6.

The switch device 1 is not limited to a heat controller switch device or an air conditioner controller device. The switch device 1 is not limited to an interior component located in a passenger compartment. The switch device 1 may be any switch device of which the maximum projection amount is regulated.

The present disclosure includes the following examples.

In one example, at least one of a switch assembly and a breakable component includes a rib that holds the breakable component in a press-fit state. This example limits scattering of breakable component fragments after the breakable components are broken by an impact applied to the switch assembly. Thus, the breakable component can be smoothly replaced.

In another example, a switch assembly is coupled to a switch mount by a breakable component. The breakable component includes a fastening portion, which is fastened to the switch mount, and a fall-off portion, which falls off from the switch mount together with the switch assembly after breakage. The fastening portion and the fall-off portion are connected by a brittle portion that breaks when an impact is applied to the switch assembly. This example breaks the brittle portion of the breakable component and separates the fastening portion from the fall-off portion in the breakable component when an impact is applied to the switch assembly, which is coupled to the switch mount. In this case, the fastening portion of the breakable component remains fastened to the switch mount, and the fall-off portion of the breakable component falls off from the switch mount together with the switch assembly. This decreases the projection amount of the switch assembly.

A certain embodiment discloses a switch device including a switch mount and a switch assembly coupled to the switch mount, wherein the switch assembly includes a circuit board, a housing shell that accommodates the circuit board, and a knob that projects from the housing shell, wherein the switch device includes a breakable spacer component located between the switch assembly and the switch mount, wherein the breakable spacer component is configured to break when an impact is applied to the switch assembly so that the switch assembly falls off from the switch mount.

In an embodiment, the breakable spacer component is a breakable washer component for use with a fastener, such as a screw, that fastens the housing shell to the switch mount. In an embodiment, the breakable washer component includes a first annular portion that is directly or indirectly fastened to the switch mount by the fastener, a second annular portion that is coaxial to or concentric to the first annular portion and engaged in a removable manner with the switch assembly, and at least one brittle portion that bridges the first annular portion and the second annular portion. In an embodiment, the switch mount includes a binder disengaged from the first annular portion of the breakable spacer component and engaged with the second annular portion of the breakable spacer component, and the binder includes a fastener through hole formed so that the first annular portion, which is separated from the second annular portion when the brittle portion breaks, moves through the fastener through hole of the binder along a center axis of the first annular portion.

The above description is intended to be illustrative, and not restrictive. For example, the above-described examples (or one or more aspects thereof) may be used in combination with each other. Other embodiments can be used, such as by one of ordinary skill in the art upon reviewing the above description. Also, in the above description, various features may be grouped together to streamline the disclosure. This should not be interpreted as intending that an unclaimed disclosed feature is essential to any claim. Rather, inventive subject matter may lie in less than all features of a particular disclosed embodiment. The scope of the invention should be determined with reference to the appended claims, along with the full scope of equivalents to which such claims are entitled.

## Claims

1. A fall-off structure for a switch configured so that a switch assembly (6) including a plurality of switch components falls off from a switch mount when an impact is received, the fall-off structure for a switch including:
a breakable component (12) that has brittleness and is configured to break when an impact is applied to the switch assembly (6),
wherein the breakable component (12) is a dedicated component independent from another component of the switch assembly (6),
the fall-off structure being **characterized in that** the switch assembly (6) includes
an accommodation portion (14) including an entrance opening (14a) and a stopper surface (14b) and configured to allow the breakable component (12) to enter the entrance opening (14a) and slidably move to the stopper surface (14b) and to hold the breakable component (12).

2. The fall-off structure according to claim 1, **characterized in that** the breakable component (12) includes a guide surface (12g) configured to set a coupling direction of the breakable component (12) relative to the switch assembly (6).

3. The fall-off structure according to claim 1, **characterized in that** the breakable component (12) is press-fitted to the accommodation portion (14)

4. A switch device (1) including:
a switch mount;
a switch assembly (6) coupled to the switch mount, wherein the switch assembly (6) includes a circuit board (7), a housing shell (9, 10) that accommodates the circuit board (7), and a knob (3) that projects from the housing shell (9, 10); and
a breakable spacer component (12) located between the switch assembly (6) and the switch mount, wherein the breakable spacer component (12) is configured to break when an impact is applied to the switch assembly (6) so that the switch assembly (6) falls off from the switch mount,
the switch device (1) being **characterized in that** the switch assembly (6) includes
an accommodation portion (14) including an entrance opening (14a) and a stopper surface (14b) and configured to allow the breakable component (12) to enter the entrance opening (14a) and slidably move to the stopper surface (14b) and to hold the breakable spacer component (12).

5. The switch device (1) according to claim 4, **characterized in that** the breakable spacer component (12) is a breakable washer component for use with a fastener (13) that fastens the housing shell (9, 10) to the switch mount.

6. The switch device (1) according to claim 5, **characterized in that** the breakable washer component (12) includes
a first annular portion (12a) that is directly or indirectly fastened to the switch mount by the fastener (13),
a second annular portion (12b) that is coaxial to or concentric to the first annular portion (12a) and engaged in a removable manner with the switch assembly (6), and
at least one brittle portion (12c) that bridges the first annular portion (12a) and the second annular portion (12b).

7. The switch device (1) according to claim 6, **characterized in that**
the switch assembly (6) includes a binder disengaged from the first annular portion (12a) of the breakable spacer component (12) and engaged with the second annular portion (12b) of the breakable spacer component (12), and
the binder includes a fastener through hole (14c) formed so that the first annular portion (12a), which is separated from the second annular portion (12b) when the brittle portion (12c) breaks, moves through the fastener through hole (14c) of the binder along a center axis of the first annular portion (12a).

8. The switch device (1) according to claim 4, **characterized in that** the accommodation portion (14) is configured to hold the breakable spacer component (12) in a press-fitted manner.

9. The switch device (1) according to claim 7, **characterized in that** the binder is configured to hold the breakable spacer component (12) in the thicknesswise direction of the breakable component (12).

## Patentansprüche

1. Eine Abfall-Struktur für einen Schalter, die so konfiguriert ist, dass eine Schalteranordnung (6), die eine Mehrzahl von Schalterkomponenten aufweist, von einer Schalterhalterung abfällt, wenn ein Aufprall empfangen wird, wobei die Abfall-Struktur für einen Schalter aufweist:
eine bruchempfindliche Komponente (12), die eine Sprödigkeit hat und die konfiguriert ist zu brechen, wenn die Schalteranordnung (6) einen Aufprall erfährt,
wobei die bruchempfindliche Komponente (12) eine zweckbestimmte Komponente ist, die unabhängig ist von einer anderen Komponente der Schalteranordnung (6),
wobei die Abfall-Struktur **dadurch gekennzeichnet ist, dass** die Schalteranordnung (6) einen Aufnahmeabschnitt (14) aufweist, der eine Eingangsöffnung (14a) und eine Anschlagfläche (14b) aufweist und der konfiguriert ist, um es der bruchempfindlichen Komponente (12) zu erlauben, in die Eingangsöffnung (14a) einzutreten und die Anschlagfläche (14b) verschiebend zu bewegen, und die bruchempfindliche Komponente (12) zu halten.

2. Die Abfall-Struktur gemäß Anspruch 1, **dadurch gekennzeichnet, dass** die bruchempfindliche Komponente (12) eine Führungsfläche (12g) aufweist, die konfiguriert ist zum Festlegen einer Kupplungsrichtung der bruchempfindlichen Komponente (12) relativ zu der Schalteranordnung (6).

3. Die Abfall-Struktur gemäß Anspruch 1, **dadurch gekennzeichnet, dass** die bruchempfindliche Komponente (12) in Presspassung an dem Aufnahmeabschnitt (14) befestigt ist.

4. Eine Schaltervorrichtung (1), aufweisend:
eine Schalterhalterung,
eine Schalteranordnung (6), die mit der Schalterhalterung gekuppelt ist, wobei die Schalteranordnung (6) eine Leiterplatte (7), eine Gehäusehülle (9, 10), in welcher die Leiterplatte (7) aufgenommen ist, und einen Knopf (3) aufweist, der von der Gehäusehülle (9, 10) vorsteht; und
eine bruchempfindliche Abstandskomponente (12), die zwischen der Schalteranordnung (6) und der Schalterhalterung angeordnet ist, wobei die bruchempfindliche Abstandskomponente (12) konfiguriert ist, um zu brechen, wenn die Schalteranordnung (6) einen Aufprall erfährt, sodass die Schalteranordnung (6) von der Schalterhalterung abfällt,
wobei die Schaltervorrichtung (1) **dadurch gekennzeichnet ist, dass** die Schalteranordnung (6) einen Aufnahmeabschnitt (14) aufweist, der eine Eingangsöffnung (14a) und eine Anschlagfläche (14b) aufweist und der konfiguriert ist, um es der bruchempfindlichen Komponente (12) zu erlauben, in die Eingangsöffnung (14a) einzutreten und die Anschlagfläche (14b) verschiebend zu bewegen, und die bruchempfindliche Abstandskomponente (12) zu halten.

5. Die Schaltervorrichtung (1) gemäß Anspruch 4, **dadurch gekennzeichnet, dass** die bruchempfindliche Abstandskomponente (12) eine bruchempfindliche Unterlegscheibenkomponente ist zur Verwendung mit einem Befestigungsteil (13), das die Gehäusehülle (9, 10) an der Schalterhalterung befestigt.

6. Die Schaltervorrichtung (1) gemäß Anspruch 5, **dadurch gekennzeichnet, dass** die bruchempfindliche Unterlegscheibenkomponente (12) aufweist:
einen ersten ringförmigen Abschnitt (12a), der direkt oder indirekt durch das Befestigungsteil (13) an der Schalterhalterung (13) befestigt ist,
einen zweiten ringförmigen Abschnitt (12b), der koaxial oder konzentrisch zu dem ersten ringförmigen Abschnitt (12a) ist und auf eine lösbare Weise mit der Schalteranordnung (6) in Eingriff ist, und
mindestens einen spröden Abschnitt (12c), der den ersten ringförmigen Abschnitt (12a) und den zweiten ringförmigen Abschnitt (12b) verbindet.

7. Die Schaltervorrichtung (1) gemäß Anspruch 6, **dadurch gekennzeichnet, dass** die Schalteranordnung (6) eine Einfassung aufweist, der von dem ersten ringförmigen Abschnitt (12a) der bruchempfindlichen Abstandskomponente (12) gelöst ist und der mit dem zweiten ringförmigen Abschnitt (12b) der bruchempfindlichen Abstandskomponente (12) in Eingriff ist, und
wobei die Einfassung ein Befestigungsteil-Durchgangsloch (14c) aufweist, das so gebildet ist, dass sich der erste ringförmige Abschnitt (12a), der von dem zweiten ringförmigen Abschnitt (12b) separiert wird, wenn der spröde Abschnitt (12c) bricht, durch das Befestigungsteil-Durchgangsloch (14c) der Einfassung entlang einer Mittelachse des ersten ringförmigen Abschnitts (12a) hindurchbewegt.

8. Die Schaltervorrichtung (1) gemäß Anspruch 4, **dadurch gekennzeichnet, dass** der Aufnahmeabschnitt (14) konfiguriert ist zum Halten der bruchempfindlichen Abstandskomponente (12) in einer Presspassung-Weise.

9. Die Schaltervorrichtung (1) gemäß Anspruch 7, **dadurch gekennzeichnet, dass** die Einfassung konfiguriert ist zum Halten der bruchempfindlichen Abstandskomponente (12) in der Dickenrichtung der bruchempfindlichen Abstandskomponente (12).

## Revendications

1. Structure de décroissance pour un commutateur configurée de sorte qu'un ensemble de commutateur (6) comprenant une pluralité de composants de commutateur s'affaiblit par rapport à un support de commutateur lorsqu'un impact est reçu, la structure de décroissance pour un commutateur comprenant :
un composant fracturable (12) qui présente une fragilité et est configuré pour se casser lorsqu'un impact est appliqué sur l'ensemble de commutateur (6),
dans laquelle le composant fracturable (12) est un composant dédié indépendant d'un autre composant de l'ensemble de commutateur (6),
la structure de décroissance étant **caractérisée en ce que** l'ensemble de commutateur (6) comprend :
une partie de logement (14) comprenant une ouverture d'entrée (14a) et une surface de butée (14b) et configurée pour permettre au composant fracturable (12) d'entrer dans l'ouverture d'entrée (14a) et de déplacer, de manière coulissante, la surface de butée (14b) et de maintenir le composant fracturable (12).

2. Structure de décroissance selon la revendication 1, **caractérisée en ce que** le composant fracturable (12) comprend une surface de guidage (12g) configurée pour déterminer une direction de couplage du composant fracturable (12) par rapport à l'ensemble de commutateur (6).

3. Structure de décroissance selon la revendication 1, **caractérisée en ce que** le composant fracturable (12) est ajusté par pression sur la partie de logement (14).

4. Dispositif de commutateur (1) comprenant :
un support de commutateur ;
un ensemble de commutateur (6) couplé au support de commutateur, dans lequel l'ensemble de commutateur (6) comprend une carte de circuit imprimé (7), une coque de boîtier (9, 10) qui loge la carte de circuit imprimé (7), et un bouton (3) qui fait saillie de la coque de boîtier (9, 10) ; et
un composant de dispositif d'espacement fracturable (12) positionné entre l'ensemble de commutateur (6) et le support de commutateur, dans lequel le composant de dispositif d'espacement fracturable (12) est configuré pour se casser lorsqu'un impact est appliqué sur l'ensemble de commutateur (6) de sorte que l'ensemble de commutateur (6) s'affaiblit par rapport au support de commutateur,
le dispositif de commutateur (1) étant **caractérisé en ce que** l'ensemble de commutateur (6) comprend :
une partie de logement (14) comprenant une ouverture d'entrée (14a) et une surface de butée (14b) et configurée pour permettre au composant fracturable (12) d'entrer dans l'ouverture d'entrée (14a) et de se déplacer, de manière coulissante, vers la surface de butée (14b) et de maintenir le composant de dispositif d'espacement fracturable (12).

5. Dispositif de commutateur (1) selon la revendication 4, **caractérisé en ce que** le composant de dispositif d'espacement fracturable (12) est un composant de rondelle fracturable destiné à être utilisé avec une fixation (13) qui fixe la coque de boîtier (9, 10) sur le support de commutateur.

6. Dispositif de commutateur (1) selon la revendication 5, **caractérisé en ce que** le composant de rondelle fracturable (12) comprend :
une première partie annulaire (12a) qui est directement ou indirectement fixée sur le support de commutateur par la fixation (13),
une seconde partie annulaire (12b) qui est coaxiale à ou concentrique par rapport à la première partie annulaire (12a) et mise en prise d'une manière amovible avec l'ensemble de commutateur (6), et
au moins une partie cassante (12c) qui relie la première partie annulaire (12a) et la seconde partie annulaire (12b).

7. Dispositif de commutateur (1) selon la revendication 6, **caractérisé en ce que** :
l'ensemble de commutateur (6) comprend une liaison dégagée de la première partie annulaire (12a) du composant de dispositif d'espacement fracturable (12) et mise en prise avec la seconde partie annulaire (12b) du composant de dispositif d'espacement fracturable (12), et
la liaison comprend un trou débouchant (14c) de fixation formé de sorte que la première partie annulaire (12a) qui est séparée de la seconde partie annulaire (12b) lorsque la partie cassante (12c) se casse, se déplace à travers le trou débouchant (14c) de fixation de la liaison le long d'un axe central de la première partie annulaire (12a).

8. Dispositif de commutateur (1) selon la revendication 4, **caractérisé en ce que** la partie de logement (14) est configurée pour maintenir le composant de dispositif d'espacement fracturable (12) d'une manière ajustée par pression.

9. Dispositif de commutateur (1) selon la revendication 7, **caractérisé en ce que** la liaison est configurée pour maintenir le composant de dispositif d'espacement fracturable (12) dans le sens de l'épaisseur du composant fracturable (12).
